# EUROPÄISCHE PATENTANMELDUNG

(11) **EP 1 193 957 A1**
(43) Veröffentlichungstag der Anmeldung: **03.04.2002**
(21) Anmeldenummer: 00810900.1
(22) Anmeldetag: 29.09.2000
(51) Int. Cl.: H04M 1/737

(54) **System, Kommunikationsgerät und Verfahren zum Versenden von elektronischen Mitteilungen**

(71) Anmelder: ABB RESEARCH LTD., 8050 Zürich (CH)
(72) Erfinder: Fabri, Andreas, Dr., 06130 Le Plan de Grasse (FR)
(74) Vertreter: ABB Patent Attorneys

(57) **Zusammenfassung**

Das System zum Versenden von Email-Mitteilungen über das Telefongerät einer öffentlichen Telefonsprechzelle umfasst neben dem Telefongerät (2) im wesentlichen ein portables Computergerät (3) und eine zwischen dem Telefongerät und dem Computergerät angeordnete drahtlose Datenübermittlungsverbindung (4). Diese setzt sich aus einer im Computergerät integrierten Sendeeinheit (31) sowie einer entsprechenden am Telefongerät angebrachten Empfangseinheit (21) zusammen.

Eine Email-Mitteilung kann somit zusammen mit der Email-Adresse schnell und auf einfachste Weise, ohne benutzerseitigen technischen Aufwand vom Computergerät auf das Telefongerät übermittelt werden, von wo die Email-Mitteilung automatisch über eine Email-Verteilerzentrale an die Email-Adresse gesendet wird.

## Beschreibung

### TECHNISCHES GEBIET

Bei der Erfindung wird ausgegangen von einem System zum Versenden und/ oder Empfangen von elektronischen Mitteilungen gemäss dem Oberbegriff des Patentanspruchs 1, von einem Kommunikationsgerät zum Versenden und/ oder Empfangen von elektronischen Mitteilungen gemäss dem Oberbegriff des Patentanspruchs 5, sowie von einem Verfahren zum Versenden und/ oder Empfangen von elektronischen Mitteilungen gemäss dem Oberbegriff des Patentanspruchs 7.

### STAND DER TECHNIK

In der Schweiz gibt es eine grosse Anzahl öffentlicher Telefonsprechzellen, sogenannte Publifone. Die Abdeckung mit Publifonen ist dichter als überall sonst auf der Welt. Allein rund 12'500 öffentliche Publifone stehen in Bahnhöfen, Flughäfen oder einfach an der Strasse. Weitere rund 42'000 von Privaten betriebene Publifone stehen in Restaurants, Hotels und Schulen.

Viele dieser Publifone enthalten neben dem eigentlichen Telefongerät ein Terminal mit einem Bildschirm und einer alphanumerischen Tastatur. Dieses Terminal, von Swisscom, dem Betreiber der Publifone, Teleguide® genannt, dient hauptsächlich als elektronisches Telefonbuch mit aktuellen Privat- und Firmeneinträgen. Zusätzlich können mit dem Teleguide-Terminal elektronische Mitteilungen, insbesondere Email-Mitteilungen an Internet-Benutzer, SMS-Mitteilungen an ein GSM-Empfänger, Paging-Mitteilungen an ein Pager-Empfänger sowie Fax-Mitteilungen an ein Fax-Gerät, versendet werden.

Die zu versendenden Mitteilungen müssen am Teleguide-Terminal eingegeben werden, ebenso in den meisten Fällen die Adresse des Empfängers, da die speziellen Adressen, wie Email-Adressen, GSM-Rufnummern und Pager-Nummern, häufig nicht in dem elektronischen Telefonbuch eingetragen sind.

Wie aus der Bedienungsanleitung zu den Teleguide-Terminals hervorgeht, ist die Länge der elektronischen Mitteilungen auf 240 Zeichen für Emails und Fax-Mitteilungen, 120 Zeichen für SMS-Mitteilungen respektive 70-120 Zeichen für Pager-Mitteilungen limitiert. Längere Mitteilungen müssen in zwei oder mehrere, separat einzugebende und zu versendete Mitteilungen aufgeteilt werden.

Die Kosten für das Versenden einer elektronischen Mitteilungen werden entweder über in das Telefongerät eingeworfenes Geld bezahlt oder aber einer in das Telefongerät eingeführten Karte, beispielsweise eine Kreditkarte oder eine PrePaid-Telefonkarte, belastet.

Die Kosten werden auch für Mitteilungen an eine ungültige Adresse belastet. Das Teleguide-Terminal zeigt keine Fehlermeldung an.

Schliesslich können über das Teleguide-Terminal ausschliesslich Mitteilungen versendet, nicht aber empfangen werden.

Viele der Benutzer dieser Teleguide-Terminals speichern ihre Telefon- oder Email-Adressverzeichnisse auf einem portablen Computergerät, wie beispielsweise einem PDA (personal digital assistant). Die meisten dieser portablen Computergeräte enthalten eine Tastatur, oder eine andere Texteingabemöglichkeit, ein Speicher zum Speicheren von Daten, eine Anzeige zum Anzeigen von Daten sowie Schnittstellen zum übermitteln von Daten, beispielsweise Infrarotschnittstellen.

Um eine Email-Mitteilung an einem Teleguide-Terminal an eine in dem Computergerät gespeicherte Email-Adresse zu versenden, muss die mitunter recht umständliche Email-Adresse über die Tastatur des Teleguide-Terminals eingeben werden. Zusätzlich muss die ganze Email-Mitteilung ebenfalls über die Tastatur des Teleguide-Terminals eingeben werden. Die Teleguide-Terminals sind insbesondere für kleingewachsene oder körperlich behinderte Menschen oftmals schwer zugänglich, so dass das Bedienen des Teleguide-Terminals und insbesondere das Eingeben von Email-Mitteilungen und Email-Adressen schwierig, wenn nicht nahezu unmöglich ist.

Die von einem Teleguide-Terminal aus versendeten Mitteilungen enthalten keinen Absender. Insbesondere bei Email-Mitteilungen ist das für die Email-Adresse des Absenders vorgesehene From-Feld leer.

Eine Möglichkeit Email-Mitteilungen direkt von einem portablen Computergerät zu versenden besteht darin, das Computergerät über ein Modem an ein Telefongerät anzuschliessen. Da in den meisten portablen Computergeräten, insbesondere in den kleinen PDA im Hosentaschenformat, kein Modem integriert ist, bedeutet dies, dass ständig ein Modem mitgeführt werden muss, um eine Email-Mitteilung versenden zu können.

### KURZE DARSTELLUNG DER ERFINDUNG

Eine erste Aufgabe der Erfindung besteht darin, ein System zum Versenden und/ oder Empfangen von elektronischen Mitteilungen über ein kommerziell betriebenes, öffentlich zugängliches Kommunikationsgerät zu schaffen, welches einfach zu benutzen ist.

Eine zweite Aufgabe der Erfindung besteht darin, ein kommerziell betriebenes, öffentlich zugängliches Kommunikationsgerät zum Versenden und/ oder Empfangen von elektronischen Mitteilungen zu schaffen, welches von einem Dateneingabegerät über eine einfache zu benutzende Schnittstelle ansprechbar ist.

Eine dritte Aufgabe der Erfindung besteht schliesslich darin, ein Verfahren zum Versenden und/ oder Empfangen von elektronischen Mitteilungen über ein kommerziell betriebenes, öffentlich zugängliches Kommunikationsgerät zu schaffen, welches vom Benutzer ohne komplizierte, technische Aufwände einfach und schnell durchführbar ist.

Die erste Aufgabe wird erfindungsgemäss durch ein System mit den Merkmalen des Patentanspruchs 1 gelöst. Im erfindungsgemässen System ist ein portables Computergerät vorgesehen, welches dem Benutzer als Eingabeeinheit zum Eingeben der elektronischen Mitteilung und einer Adresse dient, und welches über eine drahtlose Datenübertmittlungsverbindung mit dem Kommunikationsgerät verbunden ist.

An dem Kommunikationsgerät ist lediglich eine Empfangseinheit zum Empfangen drahtlos übermittelter Daten angebracht. Diese Empfangseinheit weist keine fehleranfälligen und/ oder mechanisch beanspruchten Teile wie Anzeige und Tastatur auf.

In einer vorteilhaften Ausführungsform des erfindungsgemässen Systems weist das Kommunikationsgerät zusätzlich eine Sendeeinheit zum drahtlosen Übermitteln von Daten auf, und das portable Computergerät weist zusätzlich eine entsprechende Empfangseinheit zum Empfangen der drahtlos übermittelten Daten auf. Damit können elektronische Mitteilungen vom portablen Computergerät gesendet und empfangen werden.

Die zweite Aufgabe wird erfindungsgemäss durch ein Kommunikationsgerät mit den Merkmalen des Patentanspruchs 5 gelöst. Das erfindungsgemässe Kommunikationsgerät verfügt über eine Sende- und/ oder Empfangseinheit, welche als Teil einer drahtlosen Datenübermittlungsverbindung zu dem Dateneingabegerät ausgebildet ist.

Die dritte Aufgabe wird erfindungsgemäss durch ein Verfahren mit den Merkmalen des Patentanspruchs 7 gelöst. Im erfindungsgemässe Verfahren wird beim Versenden einer elektronischen Mitteilung über das Kommunikationsgerät, die in einem portablen Computergerät gespeicherte elektronische Mitteilung über eine drahtlose Datenübermittlungsverbindung zwischen dem Computergerät und dem Kommunikationsgerät an das Kommunikationsgerät gesendet.

Somit können vorgängig in das Computergerät eingegebene elektronische Mitteilungen schnell und ohne grossen technischen Aufwand versendet werden. Besonders vorteilhaft ist dabei, dass die Mitteilung nicht in der Öffentlichkeit in ein Eingabegerät eingegeben werden muss. Dadurch verkürzt sich die Aufenthaltszeit des Benutzers im Bereich des Kommunikationsgerätes, was auch für allfällig wartende, nächste Benutzer vorteilhaft ist.

Beim Empfangen einer elektronischen Mitteilung über das Kommunikationsgerät wird eine in der Mitteilungsverteilerzentrale gespeicherte elektronische Mitteilung über die Kommunikationsleitung, das Kommunikationsgerät sowie die drahtlose Datenübermittlungsverbindung an das portable Computergerät geschickt und darin gespeichert.

Dadurch wird die schriftliche Erreichbarkeit per elektronischer Mitteilung weiter erhöht. Wiederum ist besonders vorteilhaft, dass die Verweildauer im Bereich des Kommunikationsgerätes äusserst kurz ist, da die elektronische Mitteilungen nicht direkt gelesen zu werden brauchen.

In einer besonders vorteilhaften Ausführungsform des erfindungsgemässen Verfahrens wird beim Versenden und beim Empfangen ein den Benutzer eindeutig identifizierender, registrierter Schlüssel an das Kommunikationsgerät übermittelt.

Dadurch kann auf einfache Weise Zugriffsberechtigung geprüft werden. Ebenso einfach können beanspruchte Leistungen dem über den Schlüssel identifizierbaren Benutzer in Rechnung gestellt werden.

### KURZE BESCHREIBUNG DER ZEICHNUNGEN

Ausführungsbeispiele der Erfindung und die damit erzielbaren weiteren Vorteile werden nachfolgend anhand von Zeichnungen näher erläutert. Hierbei zeigt:
- Fig. 1: eine Darstellung der wesentlichen Komponenten des erfindungsgemässen Systems zum Versenden und/ oder Empfangen voh Email-Mitteilungen, und
- Fig. 2: eine schematische Darstellung des gesamten Systems nach Fig. 1.

### WEG ZUR AUSFÜHRUNG DER ERFINDUNG

In allen Figuren beziehen sich gleiche Bezugszeichen auf gleichwirkende Teile.

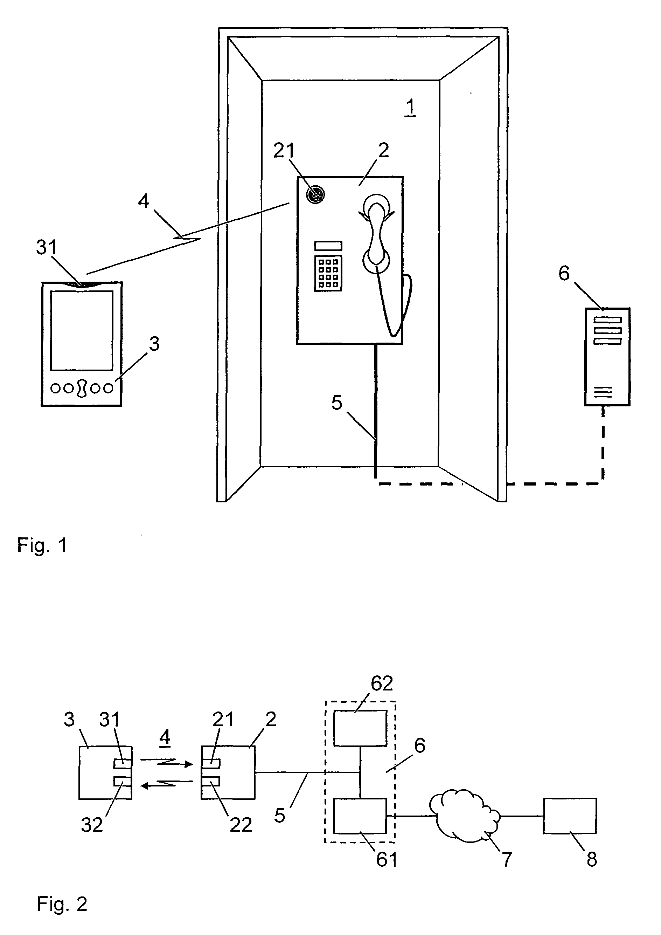

Fig. 1 zeigt das erfindungsgemässe System zum Versenden und/ oder Empfangen von elektronischen Mitteilungen, wie Email-, Fax-, SMS- oder Pager-Mitteilungen. Im wesentlichen setzt sich dieses aus einem öffentlich zugänglichen und kommerziell betriebenen Kommunikationsgerät 2, in der hier erläuterten Ausführungsform als Telefongerät einer öffentlichen Telefonsprechzelle 1 ausgebildet, sowie einem portablen Computergerät 3 zusammen.

Das portable Computergerät 3, welches beispielsweise ein PDA oder ein anderer Kleincomputer ist, verfügt über eine Sendeeinheit 31 zum drahtlosen Übermitteln von Daten. Die Sendeeinheit umfasst beispielsweise eine Infrarot-Diode zum Senden von infrarotem Licht oder eine kleine Antenne zum Senden von Elektrowellen. Eine solche Sendeeinheit, insbesondere als Teil einer Infrarot-Schnittstelle, ist bereits in den meisten handelsüblichen portablen Computergeräten integriert.

Das Telefongerät 2 umfasst einen Hörer oder eine hörerähnliche Vorrichtung zum Telefonieren sowie eine Tastatur zum Eingeben einer Telefonnummer. Das Telefongerät ist zudem vorteilhafterweise mit einer Geldeingabevorrichtung zum Eingeben von Geldscheinen oder -stücken, oder mit einem Kartenleser zum Einlesen von Kredit- oder Telefonkarten ausgestattet. Damit kann ein Benutzer des Telefongeräts 2 für die beanspruchten Leistungen bezahlen. In einem gut zugänglichen Bereich des Telefongeräts, beispielsweise oben auf der Frontseite des Telefongeräts 2, ist eine Empfangseinheit 21 angebracht. Mit der Empfangseinheit können die vom portablen Computergerät gesendeten Daten empfangen werden. Die Empfangseinheit 21 umfasst beispielsweise einen Infrarot-Sensor, oder eine kleine Antenne zum Empfangen von Elektrowellen.

Das Telefongerät 2 ist über eine Kommunikationsleitung 5 mit einer Kommunikationszentrale 6 verbunden. Wie Fig. 2 zeigt, ist in der Kommunikationszentrale 6 eine Mitteilungsverteilerzentrale 61 angeordnet, welche über das Internet 7 oder andere Netzwerke mit diversen Mitteilungsempfängern 8 verbunden ist.

Zum Versenden einer elektronischen Mitteilung bringt der Benutzer das portable Computergerät 3 in die Nähe des Telefongerätes 2, so dass eine im wesentlichen fehlerfreie Datenübertragung gewährleistet ist. Dies bedeutet, dass je nach Art der Datenübertragung, Infrarot oder Elektrowellen, die Distanz zwischen dem portablen Computergerät und dem Telefongerät einige Zentimeter bis mehrere Meter beträgt. Auf dem Computergerät hat der Benutzer bereits eine elektronische Mitteilung gespeichert. Beispielsweise hat er sie selber geschrieben oder über eine Schnittstelle auf das Computergerät geladen. Auf dem Computergerät hat der Benutzer zudem eine oder mehrere Adressen gespeichert. Der Benutzer löst anschliessend den Sendevorgang aus, beispielsweise durch Drücken einer Taste. Ein den Benutzer eindeutig identifizierender Schlüssel, welcher auf dem portablen Computergerät 3 gespeichert ist, wird zusammen mit der elektronischen Mitteilung und der Adresse über die drahtlose Datenübermittlungsverbindung 4 an das Telefongerät 2 gesendet. Im Telefongerät wird der Schlüssel auf die Gültigkeit geprüft. Zu diesem Zweck wird eine elektronische Anfrage an eine Schlüsselüberprüfungszentrale 62 geschickt.

Ist der Schlüssel ungültig, wird dies am Telefongerät sofort angezeigt. Beispielsweise durch Aufleuchten eines Lämpchens oder Einblenden einer entsprechenden Anzeige auf einer kleinen Anzeige.

Ist der Schlüssel gültig, wird die elektronsiche Mitteilung mit der Adresse an die Mitteilungsverteilerzentrale 61 geschickt. Bei mehreren Mitteilungsverteilerzentralen, beispielsweise mehrerer verschiedener Betreiber, kann der Schlüssel neben dem Benutzer auch den Betreiber und somit die entsprechende Mitteilungsverteilerzentrale identifizieren, so dass die elektronische Mitteilung automatisch an die richtige Mitteilungsverteilerzentrale geschickt wird.

Aufgrund des elektronischen Schlüssels wird der elektronischen Mitteilung automatisch ein Absender angefügt. Die Schlüsselüberprüfungszentrale 62 kann, wie abgebildet, Teil der Kommunikationszentrale 6 sein, sie kann aber auch ausserhalb der Kommunikationszentrale angeordnet sein.

Das Überprüfen des Schlüssels kann auch erst in der Mitteilungsverteilerzentrale 61 geschehen. Dies setzt allerdings voraus, dass das Telefongerät nur mit einer Mitteilungsverteilerzentrale verbunden ist. In diesem Fall wird die elektronsiche Mitteilung, die Adresse und der elektronische Schlüssel vom Telefongerät automatisch an diese Mitteilungsverteilerzentrale geschickt.

In der Mitteilungsverteilerzentrale wird die elektronische Mitteilung über das Internet oder ein anderes Netzwerk an die Adresse geschickt.

In einer speziellen Ausführungsform des erfindungsgemässen Systems enthält das Kommunikationsgerät 2 neben der Empfangseinheit 21 eine entsprechende Sendeeinheit 22 zum drahtlosen Übermitteln von Daten. Gemäss Fig. 2 enthält das portable Computergerät 3 neben der Sendeeinheit 31 ebenfalls eine entsprechende Empfangseinheit 32. Dadurch lassen sich Daten auch vom Kommunikationsgerät 2 auf das portable Computergerät 3 übermitteln.

Wird das portable Computergerät 3 in die Nähe des Kommunikationsgerät 2 gebracht, wird automatisch oder manuell ein Empfangsvorgang ausgelöst, bei dem zuerst der Schlüssel vom Computergerät auf das Kommunikationsgerät übermittelt wird. Nach einer entsprechenden Überprüfung des Schlüssels werden elektronische Mitteilungen, welche an den Benutzer des portablen Computergerätes adressiert und in der Mitteilungsverteilerzentrale 61 abrufbereit gespeichert sind, über das Kommunikationsgerät 2 und die drahtlose Datenübermittlungsverbindung 4 auf das portable Computergerät 3 übermittelt.

Die Kosten für die beanspruchten Leistungen werden entweder direkt mit am Kommunikationsgerät eingegebenem Geld bezahlt, oder einer am Kommunikationsgerät eingeführten Kredit- oder Telefonkarte belastet. Aufgrund der eindeutigen Identifizierung des Benutzers können diesem aber auch nachträglich die beanspruchten Leistungen in Rechnung gestellt werden.

Die versend- und empfangbaren elektronischen Mitteilungen beschränken sich nicht auf reine Text-Mitteilungen, sondern können insbesondere auch Bilder, Videosequenzen oder Musik enthalten. Beispielsweise könnten in empfangenen elektronischen Mitteilungen aktualisierte Kalendereinträge für den Benutzer enthalten sein, oder Telefonbeantwortermitteilungen, welche von einem Telefonbeantworter automatisch an die Adresse des Benutzers gesendet werden.

### BEZEICHNUNGSLISTE

- 1: Öffentliche Telefonsprechzelle
- 2: Kommunikationsgerät, Telefongerät
- 21: Empfangseinheit am Kommunikationsgerät
- 22: Sendeeinheit am Kommunikationsgerät
- 3: Portables Computergerät
- 31: Sendeeinheit am Computergerät
- 32: Empfangseinheit am Computergerät
- 4: Drahtlose Datenübermittlungsverbindung
- 5: Kommunikationsleitung
- 6: Kommunikationszentrale
- 61: Mitteilungsverteilerzentrale
- 62: Schlüsselüberprüfungszentrale
- 7: Internet
- 8: Mitteilungs-Empfänger

## Patentansprüche

1. System zum Versenden und/oder Empfangen von elektronischen Mitteilungen über ein kommerziell betriebenes, öffentliches Kommunikationsgerät (2), insbesondere ein Telefongerät einer öffentlichen Telefonsprechzelle (1), umfassend
- ein an einem Kommunikationsnetzwerk angeschlossenes, öffentliches Kommunikationsgerät (2),
- eine Eingabeeinheit zum Eingeben von Daten, und
- eine Datenübermittlungsverbindung (4) zwischen der Eingabeeinheit und dem Kommunikationsgerät (2),
**dadurch gekennzeichnet, dass**
- die Eingabeeinheit ein portables Computergerät (3) ist, und dass
- die Datenübermittlungsverbindung (4) drahtlos ausgebildet ist.

2. System nach Anspruch 1, **dadurch gekennzeichnet, dass**
- die Datenübermittlungsverbindung (4) mindestens eine erste Sendeeinheit und mindestens eine erste Empfangseinheit zum Senden respektive Empfangen von Daten umfasst, wobei
- die erste Sendeeinheit (31) Teil des portablen Computergerätes (3) ist, und
- die erste Empfangseinheit (21) Teil des Kommunikationsgerätes (2) ist.

3. System nach Anspruch 2, **dadurch gekennzeichnet, dass**
- die Datenübermittlungsverbindung (4) eine zweite Sende- und eine zweite Empfangseinheit zum Senden respektive Empfangen von Daten umfasst, wobei
- die zweite Sendeeinheit (22) Teil des Kommunikationsgerätes (2) ist, und
- die zweite Empfangseinheit (32) Teil des portablen Computergerätes (3) ist.

4. System nach einem der Ansprüche 1 bis 3, **dadurch gekennzeichnet, dass**
- im portablen Computergerät (3) ein das portable Computergerät und/ oder ein Benutzer des portablen Computergerätes gegenüber dem
Kommunikationsgerät (2) eindeutig identifizierender, elektronischer Schlüssel gespeichert ist.

5. Kommerziell betriebenes Kommunikationsgerät zum Versenden und/ oder Empfangen von elektronischen Mitteilungen, wobei
- das Kommunikationsgerät (2) öffentlich zugänglich angeordnet ist,
- das Kommunikationsgerät (2) über eine Kommunikationsleitung (5) an ein Kommunikationsnetzwerk angeschlossen ist, und
- das Kommunikationsgerät (2) eine Sende- (22) und/ oder Empfangseinheit (21) enthält, welche als Teil einer Datenübermittlungsverbindung (4) zu einem in unmittelbarer Nähe befindlichen Eingabegerät (3) zum Eingeben von Daten ausgebildet ist,
**dadurch gekennzeichnet, dass**
- die Sende- und/ oder Empfangseinheit zum drahtlosen Senden von Daten respektive zum Empfangen von drahtlos übermittelten Daten ausgebildet ist.

6. Kommunikationsgerät nach Anspruch 5, **dadurch gekennzeichnet, dass**
- das Kommunikationsgerät (2) ein Telefongerät einer öffentlichen Telefonsprechzelle (1) ist.

7. Verfahren zum Versenden und/ oder Empfangen von elektronischen Mitteilungen über ein kommerziell betriebenes öffentliches Kommunikationsgerät, **gekennzeichnet durch** folgende Verfahrensschritte:
- ein mit einer Sendeeinheit (31) zum drahtlosen Übermitteln von Daten ausgestattetes, portables Computergerät (3) wird in die Nähe des mit einer Empfängereinheit (21) zum Empfangen der drahtlos übermittelten Daten ausgestatteten Komunikationsgerätes (2) gebracht,
beim Versenden von elektronischen Mitteilungen
- wird eine in das portable Computergerät (3) eingegebene und/ oder darin gespeicherte elektronische Mitteilung zusammen mit einer ebenfalls in das portable Computergerät eingegebenen und/ oder darin gespeicherten Adresse vom portablen Computergerät (3) auf das Komunikationsgerät (2) übermittelt, und
- wird anschliessend die elektronische Mitteilung vom Kommunikationsgerät (2) an die Adresse geschickt,
und beim Empfangen von elektronischen Mitteilungen
- wird eine in einer Mitteilungsverteilerzentrale (61) gespeicherte elektronische Mitteilung an das mit einer Sendeeinheit (22) zum drahtlosen Übermitteln von Daten ausgestattete Kommunikationsgerät (2) geschickt, und
- wird die elektronische Mitteilung anschliessend vom Kommunikationsgerät (2) auf das mit einer Empfangseinheit (32) zum Empfangen der drahtlos übermittelten Daten ausgestattete, portable Computergerät (3) übermittelt.

8. Verfahren nach Anspruch 7, **dadurch gekennzeichnet, dass**
- ein im Speicher des portablen Computergeräts (3) gespeicherter, elektronischer Schlüssel beim Auslösen des Sende- respektive Empfangsvorgangs vom portablen Computergerät (3) auf das Kommunikationsgerät (2) übermittelt wird, und
- der Schlüssel im Kommunikationsgerät (2) auf Gültigkeit überprüft wird.

9. Verfahren nach Anspruch 8, **dadurch gekennzeichnet, dass**
- die Gültigkeit des Schlüssels vom Kommunikationsgerät (2) mit einer elektronischen Anfrage an eine Schlüsselüberprüfungszentrale (62) überprüft wird.

10. Verfahren nach einem der Ansprüche 8 oder 9, **dadurch gekennzeichnet, dass**
- beim Versenden nur mit einem gültigen Schlüssel die elektronische Mitteilung zusammen mit der Adresse vom Kommunikationsgerät (2) an die Mitteilungsverteilerzentrale (61) geschickt wird.

11. Verfahren nach einem der Ansprüche 8 bis 10, **dadurch gekennzeichnet, dass**
- beim Empfangen nur mit einem gültigen Schlüssel die elektronische Mitteilung von der Mitteilungsverteilerzentrale (61) über das Kommunikationsgerät (2) auf das portable Computergerät (3) übermittelt wird.

12. Verfahren nach einem der Ansprüche 8 bis 11, **dadurch gekennzeichnet, dass**
- ein Benutzer anhand einer im Schlüssels enthaltenen, eindeutigen Benutzerkennzeichnung vom Kommunikationsgerät (2) erkannt wird.
